Europäisches Patentamt

European Patent Office

Office européen des brevets

⑱

(11) Publication number: **0 093 813**
**B1**

(12) **EUROPEAN PATENT SPECIFICATION**

(45) Date of publication of patent specification: **03.09.86**

(21) Application number: **82302436.9**

(22) Date of filing: **12.05.82**

(51) Int. Cl.⁴: **F 16 H 1/445, B 60 K 17/34**

(54) **Vehicle differential and transmission system.**

(43) Date of publication of application:
**16.11.83 Bulletin 83/46**

(45) Publication of the grant of the patent:
**03.09.86 Bulletin 86/36**

(84) Designated Contracting States:
**DE FR GB**

(56) References cited:
**DE-A-3 025 282**
**DE-B-1 068 567**
**FR-A- 575 443**
**GB-A- 155 139**
**US-A-1 888 884**
**US-A-3 908 775**
**US-A-4 298 085**

(73) Proprietor: **DEERE & COMPANY**
**1 John Deere Road**
**Moline Illinois 61265 (US)**

(72) Inventor: **Magin, Ludwig**
**Am Deutschhof 2+4**
**D-6707 Schifferstadt (DE)**

(74) Representative: **Pears, David Ashley et al**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a vehicle differential according to the introductory part of claim 1. The invention also relates to a transmission system incorporating such a differential, especially in a four wheel drive vehicle with the drive to one axle selectively engageable.

A vehicle differential as in the introductory part of claim 1 is known from U.S. 1 888 884. The carrier can be locked to the housing by a dog-clutch to provide a differential mode of operation. When the clutch is disengaged, over-running clutches transmit drive to the half shafts in a direct drive mode of operation, (unless the half-shafts are over-speeding and free-wheeling takes place).

Vehicle differentials are also known with a multi-disc clutch to lock one bevel gear to the housing in order to lock up the differential when spin of one wheel would otherwise prevent the transmission of useful torque to the other wheel. In some known differentials the clutch is pressure-engaged under operator control, e.g. via a pedal in the cab of the vehicle and a master cylinder. In other known differentials (DE 3 025 282 A1) the engagement is automatic, pressure being applied under control of speed sensors on the output half shafts.

Although mechanical locks for differentials are known (e.g. FR 575 443) in which a splined collar locks one bevel gear completely with respect to the housing, providing 100% lock, the known hydraulically operated clutch arrangements generally give only 40% lock and special measures are necessary to achieve higher degrees of lock, e.g. shimming the clutch plates.

Moreover, known differentials are designed for conventional vehicles with one driven axle. A fresh problem arises when it is required to utilise a differential in a second driven axle with a downstream coupling for selectively engaging drive to this axle. It is well known that the second axle of a four wheel drive vehicle should be undriven as much as possible in order to avoid excessive tyre wear. However, in known systems the continuously rotating parts driven by the wheels when the drive is disengaged, cause a significant waste of vehicle power, around 2%. Moreover the drive coupling downstream of the differential is in an oilbath and when this coupling is disengaged, the back-drive from the wheels cause churning of the oil with consequence overheating and foaming.

The object of the present invention is to provide a differential which enables the foregoing problems to be overcome.

The invention is characterised in the characterising part of claim 1. In contrast to the prior art the differential according to the invention has three modes—direct drive, differential and disengaged.

The differential is preferably locked by the control means in response to zero pressure while the differential is unlocked and the clutch is disengaged in response to high pressure, although the converse arrangement is possible. In either event, the differential has three modes:

(1) Locked for direct drive of both half-shafts.
(2) Unlocked for normal differential action (intermediate pressure).
(3) Disengaged.

In mode (3) the carrier is uncoupled from the housing so that back drive from the wheels drives only the pinions and pinion carrier; the rotating mass and energy losses are thereby reduced. Moreover there is no drive back to the second axle drive coupling and hence no churning of the oil therein.

It is preferred to provide a common control valve for the differential and the drive coupling whereby the latter is also disengaged in mode (3) but is engaged in both mode (1) and mode (2).

The actuator preferably comprises the features set forth in claim 3.

In a particularly advantageous and compact construction there is a series of looking elements equally circumferentially spaced and each in the form of a pendulum lever pivoted inside the housing. The piston pushes the elements into mesh with the pinions to lock the differential, under the action of the return spring. The pendulum levers apply pressure to the clutch via a ring and spring means acting between each element and the ring. When the elements are in mesh with the pinion they also apply the pressure to the ring to engage the clutch. When the intermediate pressure is applied to the piston it moves until the forces generated by the hydraulic pressure and the return spring equalize. This movement is sufficient to disengage the locking elements from the pinions but the said spring means remain compressed sufficiently to engage the clutch by the pressure on the said ring.

Finally, when the high pressure is applied to the piston it moves further, thereby relieving the spring means and allowing the clutch to disengage.

The invention will be described in more detail, by way of example, with reference to the accompanying drawings, in which:

Figure 1 is a cross-section of a differential embodying the invention, and

Figure 2 is a schematic diagram of part of the hydraulic system of a four wheel drive vehicle.

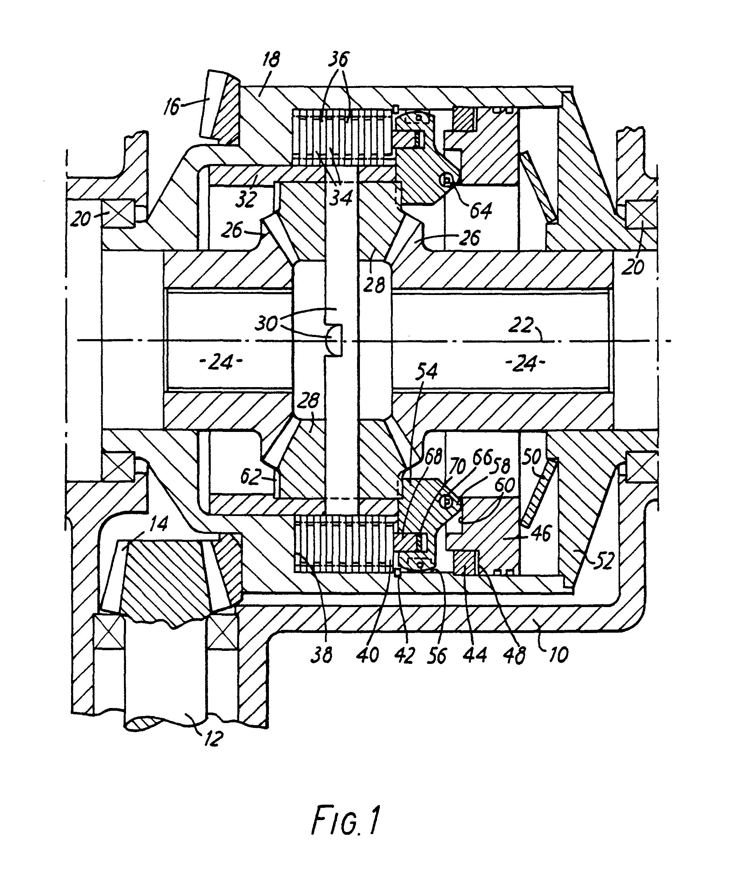

Referring to Fig. 1 a differential embodying the invention is disposed in the front axle casirtg 10 of a four wheel drive vehicle. Drive from the engine is by way of a transmission shaft 12 journalled in the housing 10 and carrying a drive pinion 14. A drive coupling (not shown) of known form is interposed between the engine and the shaft 12. The pinion 14 meshes with a ring gear 16 fixed to a differential housing 18 which is journalled in the front axial housing 10 by bearings 20 for rotation about the axis 22 of the front axle. Two half-shafts 24 sharing the same axis 22 have output bevel gears 26 splined on their adjacent ends.

The confronting bevel gears mesh in customary manner with four bevel pinions 28 rotatable on crossing transverse shafts 30. The shafts 30 are not, as is customary, mounted in the differential housing 18 itself but are mounted instead in a separate cylindrical carrier 32 rotatable in the differential housing. The external surface of the carrier 32 is provided with a series of splines which engage a set of clutch plates 34, these plates being rotationally fast with the carrier 32. The stack of plates 34, 36 abuts a shoulder 38 in the differential housing at one end while an annular pressure plate 40 is provided at the other end for applying pressure to the stack of plates to engage the clutch and render the carrier rotationally fast with the differential housing. The pressure plate 40 is retained by a circlip 42.

A collar 44 is force fitted or otherwise fixed inside the differential housing 18 and a piston 46 has a large diameter portion sliding in the housing itself and a smaller diameter portion sliding in the collar 44 so that a chamber 48 is formed between the collar and the piston. Pressure in the chamber 48 urges the piston to the right in Fig. 1, that is away from the pressure plate 40. The piston is urged to the left by a strong return spring 50, preferably in the form of a Belleville washer acting between the piston and an end cover 52 of the differential housing.

The piston acts on a series of locking elements in the form of pendulum levers 54 spaced equally around the circumference of the housing 18. Each lever 54 is pivotally mounted on the inner wall of the housing 18 between a pair of cheeks 56. Each lever has a nose 58 engaged in a corresponding recess 60 in the piston 46 and leftwards movement of the piston will also swing the inner ends of the levers 54 leftwards.

The piston and levers are illustrated in Fig. 1 in the extreme leftwards position defined by abutment of the levers with the end of the cylindrical carrier 32. In this position the levers 54 each lodge in one of a series of notches 62 provided around the base portion of each pinion 28. In order to achieve a smooth engagement of the differential lock it is possible to use friction liners on the outer surfaces of the pinion 28 instead of notches 62. In this situation, which obtains when there is no hydraulic pressure applied in the chamber 48, the differential is locked because the pinions 28 cannot rotate and the bevel gears 26 are therefore forced to rotate with the differential housing 18. As will become apparent below, the clutch 34, 36 is also engaged although this is without significance because the pinions and gears are in any event locked to the housing 18 by the levers 54.

The nose 56 of the levers 54 are held captive to the piston by a securing ring 64 passing through holes 66 in the levers. The levers are moreover notched on the sides opposite the piston to receive loosely a pressure ring 68 by means of which the levers apply pressure to the clutch pressure plate 40. A spring 70 of any convenient form, e.g. a wave washer, acts between the levers 54 and the pressure ring 68. In the situation illustrated in Fig. 1, the spring 70 is fully compressed and maximum pressure is applied to the ring 68 and pressure plate 40 so as to engage the clutch.

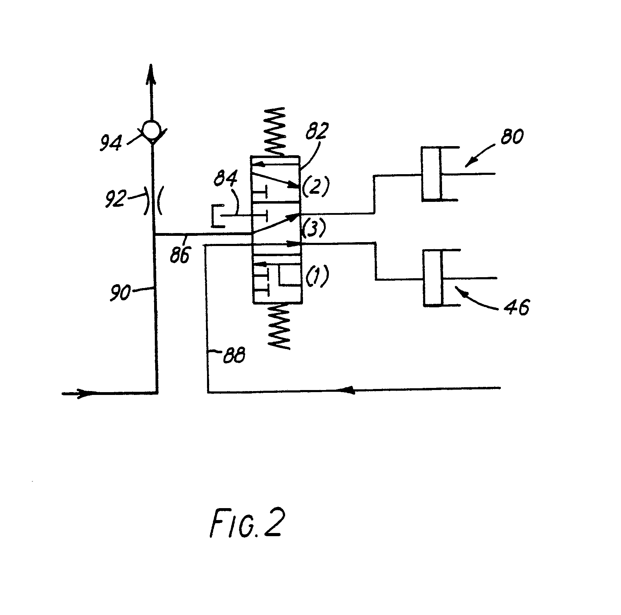

When hydraulic fluid under pressure is admitted to the chamber 48, the piston 46 moves to the right until the force generated by the hydraulic pressure equals the force generated by the return spring 50. As will be explained with reference to Fig. 2, two levels of hydraulic pressure are employed. At an intermediate level, the piston 46 moves only a little to the right, sufficient to allow the levers 54 to swing completely out of the notches 62 or completely clear of the friction lines. This accordingly unlocks the differential. The movement of the levers 54 under these circumstances leaves the spring 70 compressed to a significant amount and the pressure of this spring on the ring 68 remains sufficient to keep the clutch 34, 36 engaged. The carrier 32 is now rotationally fast with the differential housing 18 and the differential behaves as an ordinary unlocked differential allowing unequal speeds of rotation of the half-shafts 24.

When high hydraulic pressure is applied in the chamber 48, the piston 46 moves further to the right and the spring 70 is more or less completely relieved so that the pressure on the ring 68 and pressure plate 40 is negligible. The clutch 34, 36 is now disengaged and drive cannot be transmitted from the half-shafts 24 to the transmission shaft 12.

Referring now to Fig. 2, the differential of Fig. 1 is represented solely by the schematic symbol for its piston 46. The piston of the aforementioned drive coupling is similarly shown at 80. These two pistons are controlled together by a three position solenoid valve 82 having two output connections for the two pistons and three input connections, namely a connection 84 to the lubricating oil sump in the vehicle, an intermediate pressure connection 86 and a high pressure connection 88. The differential is assumed to be installed in a four wheel drive tractor having a low pressure pump such as a gear pump and a high pressure pump. The low pressure pump feeds various hydraulic functions in well known manner including control functions for gear selection and the PTO shaft. The low pressure pump moreover supplies transmission lubricating oil via a pressure regulating valve and a line 90 shown in Fig. 2. The aforementioned line 86 branches off the low pressure line 90 downstream of an orifice 92 and check valve 94. The high pressure line 88 is branched off the output of the high pressure pump which feeds the various hydraulic actuators of the tractor, e.g. lift cylinders, and also feeds the power assisted steering system if such is employed. The low pressure pump provides what is referred to herein as the intermediate pressure.

The connections from the valve 82 to the chamber 48 in Fig. 1 are now shown but will comprise some form of rotating seal to enable the oil to be fed to the chamber 48 in the rotating housing 18. The housing 18 may rotate in a collar with an annular oil way communicating with the chamber 48 through one or more holes through the housing 18. Alternatively, connection can be established by oil ways in one of the half shafts 24 and the housing 18, communicating by way of an annular seal.

The valve 82 in Fig. 2 has three positions which are labelled (1), (2) and (3) in correspondence with the three modes of the differential listed above. The valve is illustrated in position (3) which is the normal position with four wheel drive disengaged, the valve being spring biased to this central position. The high pressure line 88 is connected to the piston 46 to unlock the differential and moreover disengage the clutch 34, 36 so that the carrier 32 is free to rotate relative to the housing 18. The low pressure line 86 is connected to the piston 80 and the drive coupling to the shaft 12 is thereby disengaged.

When the valve 82 is shifted to position (2) by energising a corresponding solenoid, the piston 80 is connected to the sump and the drive coupling to the shaft 12 is engaged. Moreover, the low pressure line 86 is connected to the piston 46 and, as explained above, this provides for normal differential action by engaging the clutch 34, 36 but leaving the differential unlocked. Finally, when the valve is moved to position (1) by energising a corresponding solenoid, both pistons are connected to the sump so the drive coupling remains engaged and the differential locks up in the manner explained above.

Control of the valve 82 may be purely manual, the operator deciding when he wants to engage four wheel drive and when he additionally wants to lock the differential. Alternatively there may be an operator control only for switching four wheel drive in and out. Selection between positions (1) and (2) of the valve 82 is then automatic, e.g. under the control of speed sensors on the half shafts 24.

**Claims**

1. A vehicle differential comprising a driven housing (18), bevel gears (26) on output half-shafts (24), at least one pinion (28) in mesh with both bevel gears and mounted in a carrier (32) on a shaft (30) transverse to the axis of rotation of the housing and output half-shafts, the carrier (32) being rotatable with respect to the housing (18) but being selectively coupled thereto by a clutch (34, 36), characterised by a hydraulic actuator (46, 50) for the clutch (34, 36) and a mechanical lock (54, 62) for the differential also operated by the actuator in an arrangement such that, at one extreme of hydraulic pressure the actuator disengages both the clutch (34, 36) and the mechanical lock (54, 62), at another extreme of hydraulic pressure the actuator engages both the clutch (34, 36) and the mechanical lock (54, 62), while at an intermediate hydraulic pressure, the actuator engages the clutch without locking the differential.

2. A differential according to claim 1, characterised in that the actuator (46, 50) is urged by a spring (50) to engage both the clutch (34, 36) and the mechanical lock (54, 62) at low hydraulic pressure and disengages both the clutch (34, 36) and the mechanical lock (54, 62) at high hydraulic pressure.

3. A differential according to claim 2, characterised in that the hydraulic actuator (46, 50) comprises in common a piston (46) acted on by the spring (50) so as to assume first and second end positions and an intermediate position in response to the low, high and intermediate hydraulic pressure respectively, and by a springloaded coupling (70, 68) between the piston and the clutch (34, 36) whereby engaging pressure is applied to the clutch in the intermediate position as well as in the said one end position.

4. A differential according to claim 3, characterised by a series of locking elements equally circumferentially spaced and each in the form of a pendulum lever (54) pivoted inside the housing (18), in that the piston (46) pushes the levers (54) into mesh with the pinions (28) to lock the differential, under the action of the return spring (50) and in that the pendulum levers (54) apply pressure to the clutch (34, 36) via a ring (68) and spring means (70) acting between each lever (54) and the ring (68).

5. A differential according to claim 4, characterised in that the clutch comprises a stack of annular plates (34, 36) in an annular space between the carrier (32) and the housing, alternate plates (34) being keyed to the housing and the said ring (68) acting on one end of the stack of plates.

6. A differential according to claim 3, 4 or 5, characterised in that the return spring (50) is a Belleville spring acting between the piston (46) and an end portion (52) of the housing.

7. A vehicle transmission system comprising a driven axle including a differential according to any one of claims 1 to 6, and a hydraulically controlled drive coupling downstream of the differential for selectively engaging drive to the driven axle, characterised by a common control valve (82) for the drive coupling (80) and the hydraulic actuator (46, 50), the valve having three positions in which it acts as follows:

(1) Engages the drive coupling and locks the differential.

(2) Engages the drive coupling and unlocks the differential.

(3) Disengages the drive coupling and disengages the clutch (34, 36) in the differential.

8. A transmission system according to claim 7, in a vehicle with a low pressure pump providing the said intermediate pressure and a high pressure pump, characterised in that the control valve (82) affects the following connections:

(1) Drive coupling (80) and control means (46, 50, 54, 68, 70) to sump.

(2) Drive coupling (80) to sump and control means (46, 50, 54, 68, 70) to intermediate pressure line (86).

(3) Drive coupling (80) to intermediate pressure line (86) and control means (46, 50, 54, 68, 70) to high pressure line (88).

**Patentansprüche**

1. Fahrzeugdifferential mit einem getriebenen Gehäuse (18), Kegelrädern (26) an Ausgangshalbwellen (24), wenigstens einem Ritzel (28) in Eingriff mit beiden Kegelrädern und eingebaut in einen Träger (32) auf einer Welle (30) quer zur Drehachse des Gehäuses und der Ausgangshalbwellen, wobei der Träger (32) in bezug auf das Gehäuse (18) drehbar, aber selektiv mit diesem durch eine Kupplung (34, 36) kuppelbar ist, gekennzeichnet durch eine hydraulische Betätigungseinrichtung (46, 50) für die Kupplung (34, 36) und eine mechanische Sperreinrichtung (54, 62) für das Differential, die ebenfalls durch die Betätigungseinrichtung in einer solchen Anordnung betätigt wird, daß bei einem Extrem des hydraulischen Druckes die Betätigungseinrichtung sowohl die Kupplung (34, 36) als auch die mechanische Sperreinrichtung (54, 62) ausrückt, bei einem anderen Extrem des hydraulischen Druckes die Betätigungseinrichtung sowohl die Kupplung (34, 36) als auch die mechanische Sperreinrichtung (54, 62) einrückt, während bei einem dazwischenliegenden hydraulischen Druck die Betätigungseinrichtung die Kupplung einrückt, ohne das Differential zu sperren.

2. Differential nach Anspruch 1, dadurch gekennzeichnet, daß die Betätigungseinrichtung (46, 50) durch eine Feder (50) gedrängt wird, sowohl die Kipplung (34, 36) als auch die mechanische Sperreinrichtung (54, 62) bei niedrigem hydraulischen Druck einzurücken und sowohl die Kupplung (34, 36) als auch die mechanische Sperreinrichtung (54, 62) bei einem hohen hydraulischen Druck auszurücken.

3. Differential nach Anspruch 2, dadurch gekennzeichnet, daß die hydraulische Betätigungseinrichtung (46, 50) gemeinsam einen Kolben (46) umfaßt, auf den eine Feder (50) einwirkt, so daß er erste und zweite Endstellungen und eine dazwischenliegende Stellung in Abhängigkeit von dem niedrigen, dem hohen bzw. dem dazwischenliegenden hydraulischen Druck einnehmen kann, sowie durch eine druch Feder belastete Kupplung (70, 68) zwischen dem Kolben und der Kupplung (34, 36), wodurch ein Einrückdruck an die Kupplung in der Zwischenstelung ebenso wie in der einen genannten Endstellung gelegt wird.

4. Differential nach Anspruch 3, gekennzeichnet durch eine Reihe von Sperrelementen, die in gleichen Umfangsabständen angeordnet sind und jedes in Form eines Pendelhebels (54) ausgebildet ist, der in dem Gehäuse (18) schwenkbar ist, daß der Kolben (46) die Hebel (54) in Eingriff mit den Ritzeln (28) drängt, um das Differential zu sperren, und zwar unter der Wirkung der Rückführungsfeder (50), und daß die Pendelhebel (54) Druck an die Kupplung (34, 36) über einen Ring (68) und Federmittel (70) anlegen, die zwischen jedem Hebel (54) und dem Ring (68) wirksam sind.

5. Differential nach Anspruch 4, dadurch gekennzeichnet, daß die Kupplung einen Stapel von ringförmigen Platten (34, 36) in einem ringförmigen Raum zwischen dem Träger (32) und dem Gehäuse umfaßt, wobei die Platten (34) alternierend auf das Gehäuse aufgekeilt sind und der genannte Ring (68) auf ein Ende des Plattenstapels einwirkt.

6. Differential nach Anspruch 3, 4 oder 5, dadurch gekennzeichnet, daß die Rückführungsfeder (50) eine Tellerfeder ist, die zwischen dem Kolben (46) und einem Endabschnitt (52) des Gehäuses wirksam ist.

7. Fahrzeugtransmissionssystem, welches eine getriebene Achse einschließlich einem Differential nach irgendeinem der Ansprüche 1 bis 6 und eine hydraulisch gesteuerte Antriebskupplung stromabwärts von dem Differential, um selektiv den Antrieb zu der getriebenen Achse einzuschalten, umfaßt, gekennzeichnet durch ein gemeinsames Steuerventil (82) für die Antriebskupplung (80) und die hydraulische Betätigungseinrichtung (46, 50), wobei das Ventil drei Stellungen aufweist, in denen es wie folgt wirkt:
(1) Eingriff der Antriebskupplung und Sperrung des Differentials.
(2) Eingriff der Antriebskupplung und Entsperren des Differentials.
(3) Ausrücken der Antriebskupplung und Ausrücken der Kupplung (34, 36) in dem Differential.

8. Transmissionssystem nach Anspruch 7 in einem Fahrzeug mit einer Niederdruckpumpe zur Lieferung des genannten Zwischendruckes und einer Hochdruckpumpe, dadurch gekennzeichnet, daß das Steuerventil (82) die folgenden Verbindungen bewirkt:
(1) Antriebskupplung (8) und Steuermittel (46, 50, 54, 68, 70) mit dem Sumpf.
(2) Antriebskupplung (80) mit dem Sumpf und Steuermittel (46, 50, 54, 68, 70) mit der Zwischendruckleitung (86).
(3) Antriebskupplung (80) mit der Zwischendruckleitung (86) und Steuermitteln (46, 50, 54, €8, 70) mit der Hochdruckleitung (88).

**Revendications**

1. Différentiel pour véhicules comportant un carter mené (18), des pignons ou engrenages coniques (26) prévus sur des demi-arbres de sortie (24), au moins un pignon (28) en prise avec les deux pignons coniques et monté dans un support (32) sur un arbre (30) orienté transversalement à l'axe de rotation du carter et des demi-arbres de sortie, le support (32) pouvant tourner par rapport au carter (18) mais étant accouplé sélectivement à celui-ci par un embrayage (34, 36), caractérisé par un dispositif d'actionnement hydraulique (46, 50) prévu pour l'embrayage (34, 36) et par un dispositif de verrouillage mécanique (54, 62) pour le différentiel, également actionné par le dispositif d'actionnement, selon un agencement tel que, dans une condition extrême de pression hydraulique, le dispositif d'actionnement débraye ou dégage à la fois l'embrayage (34, 36) et le dispositif de verrouillage mécanique (54, 62), que dans une autre condition extrême de pression hydraulique, le dispositif d'actionnement engage ou embraye à la fois l'embrayage (34, 36), et le dispositif de verrouillage mécanique (54, 62), tandis que pour une pression hydraulique intermédiaire, le dispositif d'actionnement embraye l'embrayage, sans bloquer ou verrouiller le différentiel.

2. Différentiel suivant la revendication 1, caractérisé en ce que le dispositif d'actionnement (46, 50) est sollicité par un ressort (50) de manière à engager à la fois l'embrayage (34, 36) et le dispositif de verrouillage mécanique (54, 62) pour une basse pression hydraulique, et à dégager à la fois l'embrayage (34, 36) et le dispositif de verrouillage mécanique (54, 62) pour une haute pression hydraulique.

3. Différentiel suivant la revendication 2, caractérisé en ce que le dispositif d'actionnement hydraulique (46, 50) comprend en commun un piston (46) sur lequel agit le ressort (50), de façon à venir occuper des première et seconde positions limites et une position intermédiaire en réponse à des pressions hydrauliques basse, haute et intermédiaire respectivement, et par un embrayage (70, 68) soumis à une sollicitation élastique entre le piston et l'embrayage (34, 36), de sorte que la pression d'embrayage est appliquée à l'embrayage dans la position intermédiaire de même que dans la première position limite.

4. Différentiel suivant la revendication 3, caractérisé par une série d'élément de verrouillage espacés circonférentiellement de façon uniforme et ayant chacun la forme d'un levier pendulaire (54) monté à pivotement à l'intérieur du carter (18), en ce que le piston (46) repousse les leviers (54) pour les amener en prise avec les pignons (28), pour verrouiller ou bloquer le différentiel, sous l'action du ressort de rappel (50), et en ce que les leviers pendulaires (54) appliquent une pression sur l'embrayage (34, 36) par l'intermédiaire d'un anneau (68) et d'un organe élastique (70) agissant entre chaque levier (54) et l'anneau (68).

5. Différentiel suivant la revendication 4, caractérisé en ce que l'embrayage comprend un empilage de plaques ou disques annulaires (34, 36) placés dans un espace annulaire ménagé entre le support (32) et le carter, des disques alternés (34) étant clavetés sur le carter et l'anneau (68) aigssant sur une extrémité de l'empilage de disques.

6. Différentiel suivant la revendication 3, 4 ou 5, caractérisé en ce que le ressort de rappel (50) est un ressort de type Belleville agissant entre le piston (46) et une partie terminale (52) du carter.

7. Système de transmission pour véhicules comportant un essieu mené comprenant un différentiel suivant l'une quelconque des revendications 1 à 6 et un embrayage de transmission à commande hydraulique monté en aval du différentiel pour assurer de façon sélective l'entraînement de l'essieu mené, caractérisé par une valve de commande commune (82) commandant l'embrayage de transmission (80) et le dispositif d'actionnement hydraulique (46, 50), la valve comportant trois positions, dans lesquelles elle agit comme suit:

(1) enclenchement de l'embrayage de transmission et verrouillage du différentiel;

(2) enclenchement de l'embrayage de transmission et déverrouillage du différentiel;

(3) débrayage de l'embrayage de transmission et débrayage de l'embrayage (34, 36) dans le différentiel.

8. Système de transmission suivant la revendication 7, prévu dans un véhicule équipé d'une pompe basse pression fournissant la pression intermédiaire et d'un pompe haute pression, caractérisé en ce que la valve de commande (82) agit sur les raccordements suivants:

(1) mise en communication de l'embrayage de transmission (80) et du dispositif de commande (46, 50, 54, 68, 70) avec le réservoir;

(2) mise en communication de l'embrayage de transmission (80) avec le réservoir et du dispositif de commande (46, 50, 54, 68, 70) avec le conduit à pression intermédiaire (86);

(3) mise en communication de l'embrayage de transmission (80) avec le conduit à pression intermédiaire (86) et du dispositif de commande (46, 50, 54, 68, 70) avec le conduit haute pression (88).

FIG.1

0 093 813

FIG.2

2